# EUROPÄISCHE PATENTSCHRIFT

(11) **EP 1 559 928 B1**
(45) Veröffentlichungstag und Bekanntmachung des Hinweises auf die Patenterteilung: **26.05.2010**
(21) Anmeldenummer: 05001793.8
(22) Anmeldetag: 28.01.2005
(51) Int. Cl.: F16H 1/28

(54) **Umlaufgetriebe für eine Windenergieanlage**
Epicyclic gear train transmission for wind power plant
Transmission à engranage planetaire pour centrale d'énergie éolienne

(30) Priorität: 29.01.2004 DE 102004004351
(43) Veröffentlichungstag der Anmeldung: 03.08.2005
(73) Patentinhaber: NORDEX Energy GmbH, 22848 Norderstedt (DE)
(72) Erfinder: Nieswandt, Harald, 25597 Breitenberg (DE)
(74) Vertreter: Hauck Patent- und Rechtsanwälte

(56) Entgegenhaltungen:
- EP-A2- 1 045 140
- WO-A-03/002891
- DE-A1- 19 706 686
- GB-A- 660 497
- GB-A- 1 350 431
- JOHANNES LOOMAN: "Zahnradgetriebe, Grundlagen, Konstruktionen, Anwendungen in Fahrzeugen" 1996, SPRINGER VERLAG , XP002431030 * Seite 118 - Seite 121; Abbildung 3.75 *

## Beschreibung

Die vorliegende Erfindung betrifft ein Umlaufgetriebe für eine Windenergieanlage mit mehreren Planetenrädern und einem Sonnenrad.

Bei Windenergieanlagen ist sowohl der Einsatz von getriebelosen als auch mit Getriebe versehenen Windenergieanlagen bekannt. Ab einer gewissen Nennleistung werden regelmäßig Getriebe in dem Antriebsstrang verwendet. Für eine gleichmäßige Lastverteilung in einem Planetengetriebe werden in der Regel drei oder mehr Planeten eingesetzt, um die Anzahl der Zahneingriffe zu erhöhen. Hierdurch wird die Last auf eine Vielzahl einzelner Bauteile verteilt, wodurch diese wiederum kleiner und leichter ausgeführt werden können.

Bei mehr als drei Planeten besteht jedoch die Gefahr, daß durch Fertigungsungenauigkeiten eine ungleichmäßige Aufteilung der Last auf die einzelnen Planeten erfolgt. Hierzu sind bereits zahlreiche Ansätze aus dem klassischen Maschinenbau bekannt. So beschreibt Johannes Looman, "Zahngetriebe", Springer-Verlag Berlin Heidelberg und New York, 1996, in Kapitel 3.7, eine Reihe von Ansätzen zum Belastungsausgleich in Planetengetrieben. Die wichtigsten Ansätze lassen sich wie folgt zusammenfassen: ungelagertes Sonnenrad, ungelagertes Hohlrad, nachgiebig gelagerte Planetenräder, nachgiebiges Sonnen- und Hohlrad sowie radial bewegliche Planetenträger. Für den Ansatz der nachgiebig gelagerten Planetenräder schlägt Looman vor, die Planetenräder auf Metallhülsen gleitend zu lagern, wobei die Metallhülsen fest mit einem aus dem Planetenträger vorstehenden Stegbolzen verbunden sind. Die Verbindung von Metallhülse und Stegbolzen erfolgt an dem vom Planetenträger fortweisenden Ende, wobei dieses nahe dem Verbindungsabschnitt einen geschwächten Bereich besitzt. Durch Radialkräfte entstehende Neigungen und Durchbiegungen des Bolzens und der Hülse sind dabei gegenläufig, so daß die Planetenräder unter Beibehaltung ihrer parallelen Achslage radial nachgeben können. Die bekannten Ansätze für Planetengetriebe sind jedoch nicht für einen Belastungsausgleich bei Windenergieanlagen geeignet, zum einen, weil axiale Störkräfte auftreten, und zum anderen, weil die zu verteilenden Drehmomente zu groß sind.

Aus DE 101 34 245 A1 ist ein Getriebe für eine Windenergieanlage mit einer inneren Leistungsaufteilung bekannt. Das Getriebe besitzt ein großes Zahnrad, das von acht Ritzelwellen umgeben ist, deren Zahnritzel in dem großen Zahnrad kämmen. Die Ritzelwellen tragen je ein Zahnrad, wobei zwei Zahnräder von zwei Ritzelwellen jeweils ein Zahnradpaar bilden, das wechselweise vor und hinter dem großen Zahnrad angeordnet und mit einer Schrägzahnung versehen ist. Die Zahnräder der acht Ritzelwellen stehen mit jeweils einem Zahnradpaar von axial frei gelagerten Ritzelwellen in Eingriff und bilden mit diesem eine erste Stufe der Leistungsaufteilung. Die vier Ritzelwellen der ersten Stufe der Leistungsaufteilung stehen mit vier Ritzelwellen einer zweiten Stufe zur Leistungsaufteilung in Verbindung. Besondere Maßnahmen zum Belastungsausgleich der acht Ritzelwellen sind nicht vorgesehen.

Aus DE 199 16 454 A1 ist ein Getriebe für eine Windkraftanlage vorgesehen, bei dem ein zweistufiges Planetengetriebe mit einer Antriebsstufe und einer Abtriebsstufe vorgesehen ist. Die Antriebsstufe ist mit dem Rotor verbunden und mit einer Doppelschrägverzahnung versehen. Die Abtriebsstufe besitzt eine Schrägverzahnung. Diese Verzahnung der Antriebs- und der Abtriebsstufe ermöglicht bei kompakter Bauart des Getriebes eine höhere Übersetzung.

Aus US 3,303,713 ist die Lagerung eines Planetenrades auf einer Metallhülse bekannt, die an einem Ende mit einem Lagerschaft verbunden ist. Das Planetenrad sitzt gleitend auf der Metallhülse. Im Gegensatz zu der oben bereits von Looman beschriebenen Lösung besitzt hier der Lagerstift einen einheitlichen Durchmesser.

Aus DE-PS 1 450 900 ist ein Planetengetriebe mit Doppelschrägverzahnung und Lastausgleich bekannt, bei dem das innere Zentralrad ohne axiale Sicherung zwischen drei Planetenräderpaaren gelagert ist. Zusätzlich sind die beiden Aussenradkränze elastisch sowohl axial als auch in Umfangsrichtigung gelagert und radial fest abgestützt.

Aus GB 660 497 ist ein Planetengetriebe bekannt, dessen Sonnenrad sowie dessen Planetenräder eine Doppelschrägverzahnung aufweisen. Die Planetenräder sind auf einem Stift gelagert, dessen Enden einen geringeren Durchmesser aufweisen als in einem zentralen Abschnitt. Die Stifte sind im Bereich des reduzierten Durchmessers in den Planetenträgem gelagert.

Aus EP 1 045 140 A2 ist eine gattungsgemäße Windenergieanlage mit einem zweistufigen Planetengetriebe bekannt, dessen Antriebsstufe mit einer Doppelschrägverzahnung versehen ist, während dessen Abtriebsstufe mit schräg verzahnten Stufenplaneten ausgeführt ist.

Der Erfindung liegt die Aufgabe zugrunde, ein Umlaufgetriebe für Windenergieanlagen bereitzustellen, das für drei oder mehr Planetenräder einen zuverlässigen Lastausgleich schafft.

Erfindungsgemäss wird die Aufgabe durch ein Umlaufgetriebe mit den Merkmalen aus Anspruch 1 gelöst. Vorteilhafte Ausgestaltungen bilden die Gegenstände der Unteransprüche.

Das erfindungsgemässe Umlaufgetriebe für eine Windenergieanlage besitzt mehrere Planetenräder, die in einem Sonnenrad kämmen. Die Eingangswelle ist mittelbar oder unmittelbar mit einer Rotorwelle verbunden, während die Abgangswelle wiederum mittelbar oder unmittelbar mit einer Eingangswelle des Generators der Windenergieanlage verbunden ist. Die Planetenräder und das Sonnenrad besitzen eine Doppelschrägverzahnung. Erfindungsgemäss ist mindestens eines der Planetenräder auf einem Stift gelagert, der einen Bereich mit vermindertem Durchmesser besitzt. Die Planetenräder sind erfindungsgemäss auf einem Stift drehbar gelagert, der einen geschwächten Bereich besitzt, so dass dieser Stift in einem gewissen Masse zum Lastausgleich innerhalb des Getriebes biegbar ist. Durch die Verwendung einer Doppelschrägverzahnung treten zwischen den Planetenrädern und dem Sonnenrad keine Kräfte in axialer Richtung des Stifts auf, so daß die Ausbildung des Stifts mit einem geschwächten Bereich trotz der großen Lasten möglich ist. Durch die erfindungsgemäße Ausgestaltung des Umlaufgetriebes für Windenergieanlagen gelingt es, bei der Verwendung von drei oder mehr Planetenrädern einen Belastungsausgleich zu erzielen, der auch bei Windenergieanlagen mit bis zu fünf oder mehr Megawatt geeignet ist.

In einer bevorzugten Ausgestaltung ist als Doppelschrägverzahnung eine Pfeilverzahnung vorgesehen, bei der Flankenlinien einen entgegengesetzt gleichen Neigungswinkel besitzen. Andere Anwendungen im allgemeinen Maschinenbau sind denkbar, wenn kompakte Getriebe mit mehr als drei Planeten eingesetzt werden sollen.

Mindestens eines der Planetenräder ist auf dem Stift drehbar gelagert, wobei bevorzugt die Lagerung über ein Wälzlager erfolgt. Als Wälzlager wird bevorzugt ein Rollenlager eingesetzt, das beispielsweise zwei Rollensätze besitzt.

In einer bevorzugten Ausgestaltung reicht der Innenring mindestens über den Bereich mit dem verminderten Durchmesser oder überdeckt diesen vollständig.

In einer besonders bevorzugten Ausgestaltung besitzt der Stift einen ersten Abschnitt mit einem ersten Durchmesser, der in den Abschnitt mit dem verminderten Durchmesser übergeht, und einen zweiten Abschnitt mit einem zweiten Durchmesser, der sich an den Abschnitt mit vermindertem Durchmesser anschließt, wobei der erste Durchmesser kleiner als der zweite Durchmesser ist. Wird beim Lastausgleich das Planetenrad ungleichmäßig belastet, so kann sich aufgrund des Abstandes zwischen Lagerstift und Innenring der Stift in einem gewissen Maße biegen und das Ritzel sich parallel verschieben. Alternativ kann der Stift auch mit dem Bereich mit vermindertem Durchmesser eingespannt sein, so daß der Stift lediglich einen ersten Abschnitt mit einem größeren Durchmesser aufweist. Es ist möglich, den Stift mehrteilig aus unterschiedlichen Werkstoffen herzustellen, beispielsweise um ein gewünschtes Biegeverhalten und eine geeignete Festigkeit zu erzielen.

Die erfindungsgemäße Ausgestaltung der Planetenradlagerung wird anhand eines Beispiels näher erläutert.

### Es zeigt:

- Fig. 1: einen Querschnitt durch einen belasteten Lagerstift,
- Fig. 2: einen ersten Lagerstift und Axialkräfte bei Doppelschrägverzahnung im Querschnitt und
- Fig. 3: die Axialkräfte bei Doppelschrägverzahnung bei einem zweiten Lagerstift im Querschnitt.

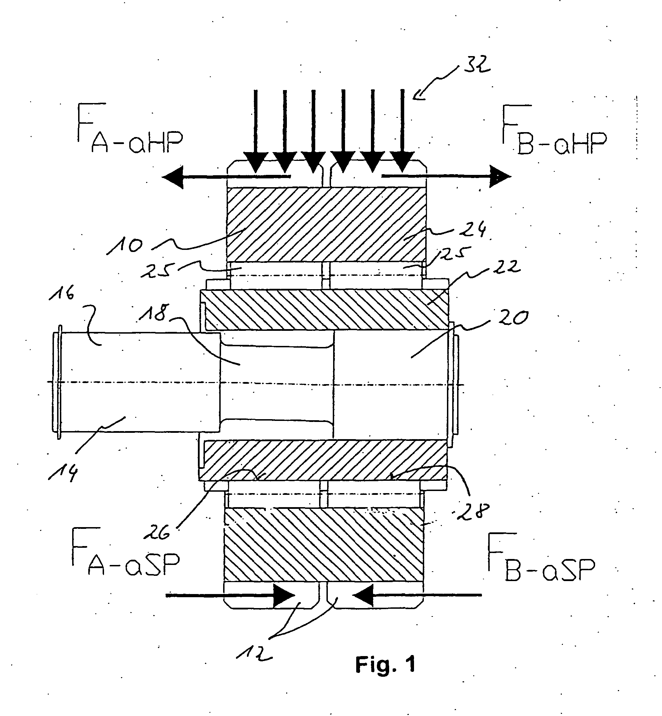

Fig. 1 zeigt ein Planetenrad 10 mit einer Doppenschrägverzahnung, das drehbar auf einem Lagerstift 14 gelagert ist. Der Lagerstift 14 ist drehfest in einem Planetenträger (nicht dargestellt) gelagert. Wie allgemein üblich, kämmt das Planetenrad 10 in einem Sonnenrad und in einem Umlaufkranz und/oder weiteren Zahnrädern. Der Lagerstift 14 besitzt einen ersten Abschnitt 16, einen Abschnitt mit vermindertem Durchmesser 18 und einen zweiten Abschnitt 20. Der Durchmesser des zweiten Abschnitts 20 ist größer als der Durchmesser des ersten Abschnitts 16. Der Abschnitt mit dem verminderten Durchmesser ist kürzer als der zweite Abschnitt 20. In dem dargestellten Ausführungsbeispiel aus Fig. 1 besitzt der erste Abschnitt 16 ein größeren Durchmesser als der Bereich mit dem verminderten Durchmesser 18.

Der Anschluß des Abschnitts 18 an den Abschnitt 16 und den Abschnitt 20 erfolgt über abgerundete Übergänge.

Das Zahnrad 10 ist an dem zweiten Abschnitt 20 über ein Wälzlager mit einem Innenring 22 und einem Außenring 24 gelagert. Zwischen Innenring und Außenring sind zwei Sätze von zylindrischen Rollenkörpern 25 angeordnet. Die Rollenkörper 25 laufen in einem Paar von Rollbahnen 26 und 28 in dem Innenring 22. Eine vollständige axiale Fixierung des Wälzlagers entfällt, damit sich die Doppelschrägverzahnung axial ausrichten kann.

Fig. 1 zeigt die Funktionsweise des Planetenrades 10 bei einem Lastausgleich. Radial auf das Planetenrad 10 wirkende Kräfte 32 führen zu einem Parallelversatz des Planetenrades 10 gegenüber der Längsachse des Stifts 14. Bei dem dargestellten Parallelversatz liegt der Stift 14 im Abschnitt 16 näher an dem Innenring 22 des Lagers als in einem nicht belasteten Zustand.

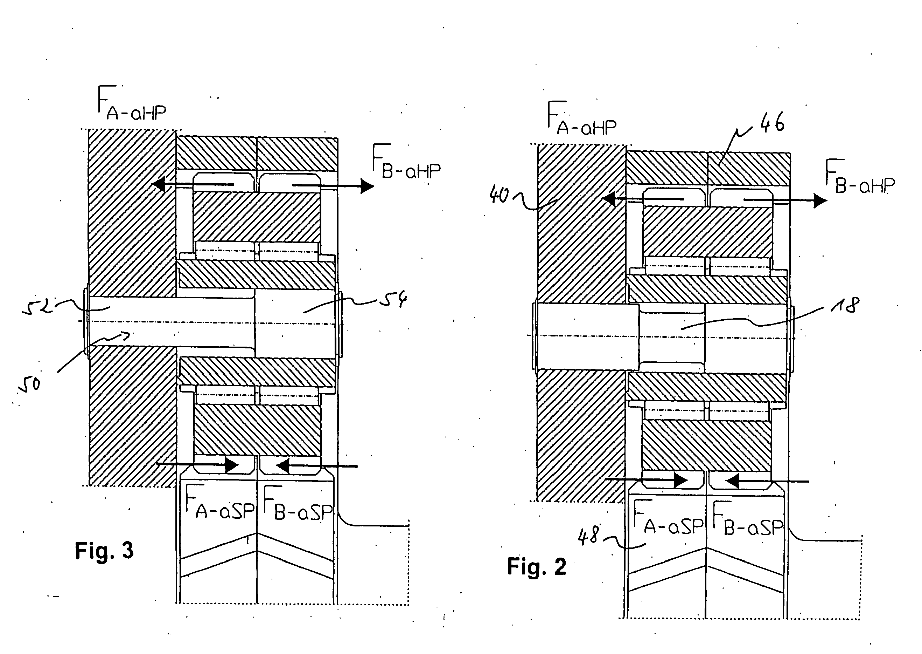

Fig. 2 zeigt die Ausgestaltung aus Fig. 1 drehsicher in einem Planetenträger 40 gelagert. Gleiche Elemente tragen gleiche Bezugszeichen. Das Planetenrad 10 kämmt einerseits in einem Umlaufkranz 46 und andererseits in einem Sonnenrad 48. Die dabei auftretenden Kräftepaare F_{A-aHP} und F_{B-aHP} sowie F_{A-aSP} und F_{B-aSP} sind in der Fig. 2 eingezeichnet. Diese Kräftepaare heben sich auf, so daß auf das Planetenrad keine axiale Kraft wirkt und dieses somit auch kein Kippmoment erfährt. Hierdurch kann bei Getrieben für Windenergieanlagen mit großer Nennleistung der Lagerstift für das Planetenrad mit dem geschwächten Bereich 50 ausgestattet werden, um so bei drei oder mehr Planetenrädern durch Fertigungstoleranzen oder ungleichmäßig eingeleitete Kräfte bedingte Lastverteilungen auszugleichen.

Fig. 3 zeigt eine alternative Ausgestaltung für einen Lagerstift 50, der einen Abschnitt 52 mit vermindertem Durchmesser und Halteabschnitt 54 besitzt, wobei der Halteabschnitt 54 einen größeren Durchmesser besitzt.

Vorstehend wurde die Erfindung anhand eines Planetenrades erläutert. Es ist jedoch ohne weiteres möglich einen biegbaren Lagerungsstift zusätzlich oder ausschließlich beim Sonnenrad einzusetzen.

Sowohl der Lagerstift aus Fig. 1, 2 als auch der Lagerstift aus Fig. 3 kann einstückig hergestellt sein. Es ist auch möglich diesen mehrstückig auszubilden, um unterschiedliche Werkstoffe einzusetzen.

## Patentansprüche

1. Windenergieanlage mit einem Umlaufgetriebe, das mehrere Planetenräder (10) und ein Sonnenrad aufweist, dessen Eingangswelle mit einem Rotor und dessen Abgangswelle mit einem Generator der Windenergieanlage verbunden ist, Planetenräder und Sonnenrad besitzen eine Doppelschrägverzahnung, **dadurch gekennzeichnet, dass** mindestens eines der Planetenräder auf einem Stift (14; 50) drehbar gelagert ist, der einen Bereich (18; 52) mit vermindertem Durchmesser besitzt, sodass der Stift zum Lastenausgleich innerhalb des Umlaufgetriebes biegbar ist.

2. Windenergieanlage nach Anspruch 1, **dadurch gekennzeichnet, dass** als Doppelschrägverzahnung eine Pfeilverzahnung vorgesehen ist, bei der die Flankenlinien einen entgegengesetzten gleichen Neigungswinkel besitzen.

3. Windenergieanlage nach einem der Ansprüche 1 oder 2, **dadurch gekennzeichnet, dass** mindestens eines der Planetenräder (10) auf dem Stift (14; 50) drehbar gelagert ist.

4. Windenergieanlage nach Anspruch 3, **dadurch gekennzeichnet, dass** mindestens eines der Planetenräder (10) auf dem Stift (14; 50) mit einem Wälzlager (24, 25, 26) drehbar gelagert ist.

5. Windenergieanlage nach Anspruch 4, **dadurch gekennzeichnet, dass** das Wälzlager als Rollenlager ausgebildet ist.

6. Windenergieanlage nach Anspruch 5, **dadurch gekennzeichnet, dass** das Rollenlager zwei Rollensätze aufweist.

7. Windenergieanlage nach einem der Ansprüche 1 bis 6, **dadurch gekennzeichnet, dass** der Stift (14) einen ersten Abschnitt (16) mit einem ersten Durchmesser, der in den Bereich (18) mit vermindertem Durchmesser übergeht, und einen zweiten Abschnitt (20) mit einem zweiten Durchmesser besitzt, der sich an den Bereich (18) mit vermindertem Durchmesser anschliesst, wobei der erste Durchmesser des ersten Abschnitts (16) kleiner als der zweite Durchmesser des zweiten Abschnitts (20) ist.

8. Windenergieanlage nach Anspruch 7 oder 8, **dadurch gekennzeichnet, dass** der Innenring (22) auf dem zweiten Abschnitt (20) gehalten ist.

9. Windenergieanlage nach einem der Ansprüche 1 bis 6, **dadurch gekennzeichnet, dass** der Stift (50) einen Abschnitt (52) mit einem verminderten Durchmesser besitzt, an den sich ein zweiter Abschnitt (54) mit einem grösseren Durchmesser anschliesst.

10. Windenergieanlage nach einem der Ansprüche 1 bis 9, **dadurch gekennzeichnet, dass** der Stift (14; 50) einstückig ausgebildet ist.

11. Windenergieanlage nach einem der Ansprüche 1 bis 9, **dadurch gekennzeichnet, dass** der Stift (14; 50) mehrstückig ausgebildet ist.

12. Windenergieanlage nach Anspruch 11, **dadurch gekennzeichnet, dass** der Stift (14; 50) aus zwei oder mehr Werkstoffen hergestellt ist.

13. Windenergieanlage nach einem der Ansprüche 1 bis 12, **dadurch gekennzeichnet, dass** sämtliche Planetenräder auf dem Stift (14; 50) gelagert sind, der einen Beriech mit vermindertem Durchmesser besitzt.

## Claims

1. A wind power plant with an epicyclic gear train transmission, which has several planetary wheels (10) and a sun wheel, the input shaft of which is connected with a rotor and the output shaft of which is connected with a generator of the wind power plant, planetary wheels and sun wheel have double helical gearing, **characterized in that** at least one of the planetary wheels is swivel mounted on a pin (14; 50), which has an area (18; 52) with a reduced diameter, so that the pin can be bent for load distribution within the epicyclic gear train transmission.

2. The wind power plant according to claim 1, **characterized in that** a herringbone gearing is provided as the double helical gearing, in which the flank lines have an opposite, even angle of inclination.

3. The wind power plant according to one of claims 1 or 2, **characterized in that** at least one of the planetary wheels (10) is swivel mounted on the pin (14; 50).

4. The wind power plant according to claim 3, **characterized in that** at least one of the planetary wheels (10) is swivel mounted on the pin (14; 50) with a roller bearing (24, 25, 26).

5. The wind power plant according to claim 4, **characterized in that** the ball bearing is designed as a roller bearing.

6. The wind power plant according to claim 5, **characterized in that** the roller bearing has two roller sets.

7. The wind power plant according to one of claims 1 through 6, **characterized in that** the pin (14) has a first section (16) with a first diameter, which transitions into the area (18) with the reduced diameter, and a second section (20) with a second diameter, which connects to the area (18) with the reduced diameter, wherein the first diameter of the first section (16) is smaller than the second diameter of the second section (20).

8. The wind power plant according to claim 7 or 8, **characterized in that** the inner ring (22) is held on the second section (20).

9. The wind power plant according to one of claims 1 through 6, **characterized in that** the pin (50) has a section (52) with a reduced diameter, to which a second section (54) with a greater diameter connects.

10. The wind power plant according to one of claims 1 through 9, **characterized in that** the pin (14; 50) is designed as one piece.

11. The wind power plant according to one of claims 1 through 9, **characterized in that** the pin (14; 50) is designed as multiple pieces.

12. The wind power plant according to claim 11, **characterized in that** the pin (14; 50) is made from two or more materials.

13. The wind power plant according to one of claims 1 through 12, **characterized in that** all planetary wheels are mounted on the pin (14; 50), which has an area with a reduced diameter.

## Revendications

1. Centrale d'énergie éolienne comprenant une transmission à engrenage planétaire qui présente plusieurs roues planétaires (10) et une roue solaire dont l'arbre d'entrée est relié à un rotor et dont l'arbre de sortie est relié à un générateur de la centrale d'énergie éolienne, les roues planétaires et la roue solaire possédant une denture double en biais, **caractérisée en ce qu'**au moins une des roues planétaires est logée à rotation sur une broche (14 ; 50) qui possède une région (18 ; 52) de diamètre réduit, de telle sorte que la broche peut être courbée pour l'équilibrage de charges au sein de la transmission à engrenage planétaire.

2. Centrale d'énergie éolienne selon la revendication 1, **caractérisée en ce qu'**une denture chevronnée, sur laquelle les hélices possèdent un angle d'inclinaison égal opposé, est prévue en tant que denture double en biais.

3. Centrale d'énergie éolienne selon l'une quelconque des revendications 1 ou 2, **caractérisée en ce qu'**au moins une des roues planétaires (10) est logée à rotation sur la broche (14 ; 50).

4. Centrale d'énergie éolienne selon la revendication 3, **caractérisée en ce qu'**au moins une des roues planétaires (10) est logée à rotation sur la broche (14 ; 50) avec un palier à roulement (24, 25, 26).

5. Centrale d'énergie éolienne selon la revendication 4, **caractérisée en ce que** le palier à roulement est réalisé en tant que palier à rouleaux.

6. Centrale d'énergie éolienne selon la revendication 5, **caractérisée en ce que** le palier à rouleaux présente deux ensembles de rouleaux.

7. Centrale d'énergie éolienne selon l'une quelconque des revendications 1 à 6, **caractérisée en ce que** la broche (14) possède une première section (16) avec un premier diamètre qui passe dans la région (18) de diamètre réduit, et une seconde section (20) avec un second diamètre qui se raccorde à la région (18) de diamètre réduit, le premier diamètre de la première section (16) étant inférieur au second diamètre de la seconde section (20).

8. Centrale d'énergie éolienne selon la revendication 7 ou 8, **caractérisée en ce que** la bague interne (22) est maintenue sur la seconde section (20).

9. Centrale d'énergie éolienne selon l'une quelconque des revendications 1 à 6, **caractérisée en ce que** la broche (50) possède une section (52) de diamètre réduit à laquelle se raccorde une seconde section (54) de diamètre supérieur.

10. Centrale d'énergie éolienne selon l'une quelconque des revendications 1 à 9, **caractérisée en ce que** la broche (14 ; 50) est réalisée d'une pièce.

11. Centrale d'énergie éolienne selon l'une quelconque des revendications 1 à 9, **caractérisée en ce que** la broche (14 ; 50) est réalisée en plusieurs pièces.

12. Centrale d'énergie éolienne selon la revendication 11, **caractérisée en ce que** la broche (14 ; 50) est fabriquée en deux matériaux ou plus.

13. Centrale d'énergie éolienne selon l'une quelconque des revendications 1 à 12, **caractérisée en ce que** plusieurs roues planétaires sont logées sur la broche (14 ; 50) qui possède une région de diamètre réduit.
